(19) **Europäisches Patentamt European Patent Office Office européen des brevets**

(11) **EP 4 546 491 A1**

(12) **EUROPEAN PATENT APPLICATION**
published in accordance with Art. 153(4) EPC

(43) Date of publication:
**30.04.2025 Bulletin 2025/18**

(21) Application number: **23912844.0**

(22) Date of filing: **25.12.2023**

(51) International Patent Classification (IPC):
$H01M\ 10/0567^{(2010.01)}$   $H01M\ 4/38^{(2006.01)}$
$H01M\ 4/48^{(2010.01)}$   $H01M\ 4/134^{(2010.01)}$
$H01M\ 4/131^{(2010.01)}$   $H01M\ 10/0569^{(2010.01)}$
$H01M\ 10/052^{(2010.01)}$   $H01M\ 4/02^{(2006.01)}$

(52) Cooperative Patent Classification (CPC):
**H01M 4/02; H01M 4/131; H01M 4/134; H01M 4/38;
H01M 4/48; H01M 10/052; H01M 10/0567;
H01M 10/0569; Y02E 60/10**

(86) International application number:
**PCT/KR2023/021518**

(87) International publication number:
**WO 2024/144169 (04.07.2024 Gazette 2024/27)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **28.12.2022 KR 20220187433
22.12.2023 KR 20230189424**

(71) Applicant: **LG Energy Solution, Ltd.
Seoul 07335 (KR)**

(72) Inventors:
• **KIM, Eun Bee
  Daejeon 34122 (KR)**
• **HONG, Yeon Suk
  Daejeon 34122 (KR)**

(74) Representative: **Hoffmann Eitle
Patent- und Rechtsanwälte PartmbB
Arabellastraße 30
81925 München (DE)**

(54) **LITHIUM SECONDARY BATTERY**

(57)   The present application relates to a lithium secondary battery.

EP 4 546 491 A1

**Description**

[Technical Field]

The present application claims priority to and the benefit of Korean Patent Application No. 10-2022-0187433 filed in the Korean Intellectual Property Office on December 28, 2022, the entire contents of which are incorporated herein by reference.

The present application relates to a lithium secondary battery.

[Background Art]

Due to the rapid increase in the use of fossil fuels, the demand for the use of alternative energy or clean energy is increasing, and as part thereof, the fields that are being studied most actively are the fields of power generation and power storage using an electrochemical reaction.

At present, a secondary battery is a representative example of an electrochemical device that utilizes such electrochemical energy, and the range of use thereof tends to be gradually expanding.

Along with the technology development and the increase in demand for mobile devices, the demand for secondary batteries as an energy source is sharply increasing. Among such secondary batteries, lithium secondary batteries having high energy density and voltage, long cycle life, and low self-discharging rate have been commercialized and widely used. In addition, research is being actively conducted on a method for manufacturing a high-density electrode having a higher energy density per unit volume as an electrode for such a high-capacity lithium secondary battery.

In general, a secondary battery includes a positive electrode, a negative electrode, an electrolyte, and a separator. The negative electrode includes a negative electrode active material for intercalating and deintercalating lithium ions coming from the positive electrode. As a negative electrode material, carbon-based materials such as graphite are excellent in stability and reversibility, but have a limitation in terms of capacity. Therefore, in fields for the purpose of high capacity, attempts to use Si-based materials with high theoretical capacity as the negative electrode material are increasing.

That is, a lithium secondary battery is usually manufactured by using a lithium-intercalated compound, such as $LiCoO_2$ or $LiMn_2O_4$ for the positive electrode, and a non-lithium intercalated material, such as a carbon-based or Si-based material for the negative electrode. During charging, the lithium ions intercalated to the positive electrode move to the negative electrode through the electrolyte solution. During discharging, the lithium ions move back to the positive electrode from the negative electrode. During charging, lithium moving from the positive electrode to the negative electrode reacts with the electrolyte solution to form a kind of passivation film, that is, a solid electrolyte interface (SEI), on a surface of the negative electrode. The SEI inhibits transport of electrons required for the reaction of the negative electrode with the electrolyte solution to prevent decomposition of the electrolyte, thereby stabilizing a structure of the negative electrode. On the other hand, formation of SEI is irreversible to cause consumption of lithium ions. That is, the lithium consumed due to the formation of SEI does not return to the positive electrode during the subsequent discharging process, resulting in a reduction in capacity of the battery.

On the other hand, as an effort for improving the performance of the lithium secondary battery, it is needed to develop a technology for accelerating a charging rate. In order to rapidly charge a lithium secondary battery, a migration rate of lithium ions should be fast during the intercalation process of lithium ions into the negative electrode. Therefore, a battery design is being made to reduce a diffusion distance of lithium by forming a negative electrode active material layer to have a thickness at a level of a thin film, and to achieve high output by reducing internal resistance by forming a carbon-coated layer on a surface of the negative electrode active material layer to increase conductivity.

However, it is difficult to implement a high capacity with a negative electrode having such a thin film negative electrode active material layer. In addition, it is difficult to implement rapid charging in a negative electrode having a high capacity. Further, when using a silicon-based negative electrode, a content of Si in the negative electrode is increased for increase in energy density, and accordingly, in order to reduce the efficiency of the positive electrode of High Ni, which is a positive electrode material, an excessive amount of sacrificial positive electrode material is applied to be in balance with the negative electrode. However, in this case, problems of an increase in amount of gas generation in the battery cell itself and the resulting stability are caused.

In general, a carbonate compound including a fluoro group is limitedly used for a solvent contained in the electrolyte of a lithium secondary battery. That is, the carbonate compound including a fluoro group is included in order to ensure the ionic conductivity of the electrolyte, but when the carbonate compound is used in an excessive amount, problems arise such as an increase in an amount of Lewis acid and an increase in an amount of gas generation. Accordingly, in the related art, despite advantages of the carbonate compound including a fluoro group, the carbonate compound is included with a lowered content and a material with high dielectric constant such as PC is used in order to compensate for the resulting ionic conductivity. However, even in this case, the problem of the amount of gas generation at high temperatures has not been solved.

Therefore, research is needed to maintain a cell resistance, to improve high-temperature cycle performance, and to reduce an amount gas generation during storage while using a negative electrode including a silicon-based active material for high capacity.

Prior Art Document

(Patent Literature 1) Japanese Patent Application Publication No. 2009-080971

[Detailed Description of the Invention]

[Technical Problem]

As a result of research on the aforementioned problems, it was found that when a certain composition and content of an electrolyte are adjusted while using a silicon-based negative electrode to ensure capacity characteristics and rapid charging performance, a cell resistance can be maintained, high-temperature cycle performance can be improved, and an amount of gas generation during storage can be reduced. That is, it was found that the electrolyte is a major factor for gas generation during long-term storage at high temperatures, and that adjusting the composition and content of the electrolyte can reduce the amount of gas generated without affecting the performance of the lithium secondary battery.

Accordingly, the present application relates to a lithium secondary battery including a silicon-based negative electrode and an electrolyte including a specific additive.

[Technical Solution]

An exemplary embodiment of the present specification provides a lithium secondary battery including a positive electrode; a silicon-based negative electrode; a separator provided between the positive electrode and the negative electrode; and an electrolyte, wherein the silicon-based negative electrode includes a negative electrode current collector layer and a negative electrode active material layer provided on one surface or both surfaces of the negative electrode current collector layer, wherein the negative electrode active material layer includes a negative electrode active material layer composition, wherein the negative electrode active material layer composition includes a silicon-based active material, and the silicon-based active material includes one or more selected from the group consisting of $SiO_x$ (x=0), $SiO_x$ (0<x<2), SiC, and an Si alloy, wherein the electrolyte includes a solvent, a lithium salt, a fluoro group-containing additive, and vinylene carbonate (VC), wherein the vinylene carbonate is included in an amount of 0.3 part by weight or less based on 100 parts by weight of the electrolyte, wherein a carbonate compound including a fluoro group is included in an amount of 10 parts by weight or more based on 100 parts by weight of the solvent, and wherein the fluoro group-containing additive is included in an amount of 2 parts by weight or less based on 100 parts by weight of the electrolyte.

[Advantageous Effects]

The lithium secondary battery according to the present application can enable a battery with high capacity and high energy density to be ensured by using the silicon-based negative electrode, and can also ensure rapid charging performance by using the silicon-based active material with excellent capacity characteristics to form a negative electrode thickness at a level of a thin film.

In particular, the lithium secondary battery according to the present application includes, as an electrolyte, a solvent, a lithium salt, a fluoro group-containing additive, and vinylene carbonate (VC).

More specifically, a carbonate compound including a fluoro group is included in an amount of 10 parts by weight or more based on 100 parts by weight of the solvent, so that the ionic conductivity can be ensured. However, when the above solvent is used, an amount of gas generation increases, so the fluoro group-containing additive that forms an F-derived film is included in an amount of parts by weight described above, and the content of vinylene carbonate having a low thin film forming effect on the Si-based active material layer is lowered to the ranged described above, thereby adjusting the amount of gas generation.

That is, vinylene carbonate does not form an effective film on the silicon-based negative electrode and remains, and a large amount of gas is generated due to an oxidation reaction at the positive electrode. Therefore, an additive that adjusts the content of vinylene carbonate and forms an effective film on the silicon-based negative electrode is included.

Accordingly, the lithium secondary battery according to the present application has the features of ensuring performance by reducing the amount of gas generation even during long-term storage at high temperatures and ensuring ionic conductivity.

[Brief Description of Drawings]

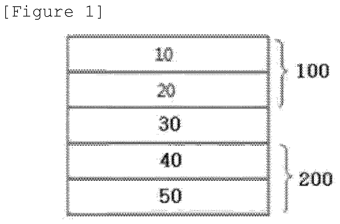

FIG. 1 shows a lithium secondary battery according to the present application.

<Explanation of Reference Numerals and Symbols>

10: negative electrode current collector layer
20: negative electrode active material layer
30: separator
40: positive electrode active material layer
50: positive electrode current collector layer
100: negative electrode
200: positive electrode

[Best Mode]

Before describing the present invention, some terms are first defined.

When one part "includes", "comprises" or "has" one constituent element in the present specification, unless otherwise specifically described, this does not mean that another constituent element is excluded, but means that another constituent element may be further included.

In the present specification, 'p to q' means a range of 'p or more and q or less'.

In the present specification, the "specific surface area" is measured by the BET method, and specifically, is calculated from a nitrogen gas adsorption amount at a liquid nitrogen temperature (77K) by using BELSORP-mino II available from BEL Japan, Inc. That is, in the present application, the BET specific surface area may refer to the specific surface area measured by the above measurement method.

In the present specification, "Dn" means a particle size distribution, and means a particle diameter at the n% point in the cumulative distribution of the number of particles according to the particle diameter. That is, D50 is a particle diameter at the 50% point in the cumulative distribution of the number of particles according to the particle diameter, D90 is a particle diameter at the 90% point in the cumulative distribution of the number of particles according to the particle diameter, and D10 is a particle diameter at the 10% point in the cumulative distribution of the number of particles according to the particle diameter. Meanwhile, the particle size distribution may be measured using a laser diffraction method. Specifically, after powder to be measured is dispersed in a dispersion medium, the resultant dispersion is introduced into a commercially available laser diffraction particle size measurement apparatus (for example, Microtrac S3500) in which a difference in a diffraction pattern according to the particle size is measured, when a laser beam passes through particles, and then a particle size distribution is calculated.

In the present specification, the description "a polymer includes a certain monomer as a monomer unit" means that the monomer participates in a polymerization reaction and is included as a repeating unit in the polymer. In the present specification, when a polymer includes a monomer, this is interpreted as the same as that the polymer includes a monomer as a monomer unit.

In the present specification, it is understood that the term 'polymer' is used in a broad sense including a copolymer unless otherwise specified as 'a homopolymer'.

In the present specification, a weight-average molecular weight (Mw) and a number-average molecular weight (Mn) are polystyrene converted molecular weights measured by gel permeation chromatography (GPC) while employing, as a standard material, a monodispersed polystyrene polymer (standard sample) having various degrees of polymerization commercially available for measuring a molecular weight. In the present specification, a molecular weight refers to a weight-average molecular weight unless particularly described otherwise.

Hereinafter, embodiments of the present invention will be described in detail with reference to the drawings so that one skilled in the art can readily implement the present invention. However, the present invention may be embodied in various different forms, and is not limited to the following descriptions.

An exemplary embodiment of the present specification provides a lithium secondary battery including a positive electrode; a silicon-based negative electrode; a separator provided between the positive electrode and the negative electrode; and an electrolyte, wherein the silicon-based negative electrode includes a negative electrode current collector layer and a negative electrode active material layer provided on one surface or both surfaces of the negative electrode current collector layer, wherein the negative electrode active material layer includes a negative electrode active material layer composition, wherein the negative electrode active material layer composition includes a silicon-based active material, and the silicon-based active material includes one or more selected from the group consisting of SiOx (x=0), SiOx (0<x<2), SiC, and an Si alloy, wherein the electrolyte includes a solvent, a lithium salt, a fluoro group-containing additive, and vinylene carbonate (VC), wherein the vinylene carbonate is included in an amount of 0.3 part by weight or less based on 100 parts by weight of the electrolyte, wherein a carbonate compound including a fluoro group is included in an amount of 10 parts by weight or more based on 100 parts by weight of the solvent, and wherein the fluoro group-containing additive is included in an amount of 2 parts by weight or less based on 100 parts by weight of the electrolyte.

It was found that the electrolyte is a major factor for gas generation during long-term storage at high temperatures, and that adjusting the composition and content of the electrolyte can reduce the amount of gas generated without affecting the performance of the lithium secondary battery.

Accordingly, the present application can ensure the ionic conductivity by including 10 parts by weight or more of the carbonate compound including a fluoro group based on 100 parts by weight of the solvent. However, when the above solvent is used, the amount of gas generation increases, so the fluoro group-containing additive that forms an F-derived film is included in an amount of parts by weight described above, and the content of vinylene carbonate having a low thin film forming effect on the Si-based active material layer is lowered to the ranged described above, thereby adjusting the amount of gas generation.

FIG. 1 is a view showing a stack structure of a lithium secondary battery according to an exemplary embodiment of the present application. Specifically, a negative electrode 100 including a negative electrode active material layer 20 on one surface of a negative electrode current collector layer 10 can be seen, a positive electrode 200 including a positive electrode active material layer 40 on one surface of a positive electrode current collector layer 50 can be seen, and the negative electrode 100 and the positive electrode 200 for a lithium secondary battery are formed in a stack structure with a separator 30 interposed therebetween.

Below, the positive electrode, negative electrode, electrolyte, and separator included in the lithium secondary battery will be described, respectively.

In an exemplary embodiment of the present application, the electrolyte may include a solvent, a lithium salt, a fluoro group-containing additive, and vinylene carbonate (VC).

The lithium secondary battery according to the present application relates to the composition of the electrolyte that can reduce an amount of gas generation even during storage at high temperatures.

In an exemplary embodiment of the present application, as the solvent, for example, an aprotic organic solvent such as N-methyl-2-pyrrolidinone, propylene carbonate, ethylene carbonate, butylene carbonate, dimethyl carbonate, diethyl carbonate, gamma-butyllolactone, 1,2-dimetoxy ethane, tetrahydrofuran, 2-methyltetrahydrofuran, dimethylsulfoxide, 1,3-dioxolane, formamide, dimethylformamide, dioxolane, acetonitrile, nitromethane, methyl formate, methyl acetate, phosphoric acid triester, trimethoxy methane, dioxolane derivative, sulfolane, methyl sulfolane, 1,3-dimethyl-2-imidazolidinone, propylene carbonate derivative, tetrahydrofuran derivative, ether, methyl propionate, or ethyl propionate may be used.

In the present application, there is provided the lithium secondary battery in which the solvent is a mixed solvent including two types of carbonate-based compounds.

In particular, among the carbonate-based mixed solvents, ethylene carbonate and propylene carbonate, which are cyclic carbonates, are high-viscosity organic solvents and can be preferably used because they have high permittivity to dissociate a lithium salt well. When the cyclic carbonate is mixed with a linear carbonate with low viscosity and low permittivity, such as dimethyl carbonate and diethyl carbonate, in a suitable ratio and used, an electrolyte having high electric conductivity may be prepared, and therefore, may be more preferably used.

In particular, in an exemplary embodiment of the present application, the carbonate compound including a fluoro group is included in an amount of 10 parts by weight or more based on 100 parts by weight of the solvent.

In another exemplary embodiment, the carbonate compound including a fluoro group may be included in an amount of 10 parts by weight or more, preferably 12 parts by weight or more, and more preferably 15 parts by weight or more, and 30 parts by weight or less, preferably 25 parts by weight or less, and more preferably 20 parts by weight or less based on 100 parts by weight based on the solvent.

In general, a carbonate compound including a fluoro group is limitedly used for a solvent contained in the electrolyte of a lithium secondary battery. That is, the carbonate compound including a fluoro group is included in order to ensure the ionic conductivity of the electrolyte, but when the carbonate compound is used in an excessive amount, problems arise such as an increase in an amount of Lewis acid and an increase in an amount of gas generation. Accordingly, in the related art, despite advantages of the carbonate compound including a fluoro group, the carbonate compound is included with a lowered content and a material with high dielectric constant such as PC is used in order to compensate for the resulting ionic conductivity. However, even in this case, the problem of the amount of gas generation at high temperatures has not been solved.

In the case of the electrolyte according to the present application, the ionic conductivity can be ensured by including the carbonate compound including a fluoro group, as a solvent, in an amount of the parts by weight described above, and at the same time, the problem of gas generation accordingly is addressed by adjusting the content of vinylene carbonate content, which will be described later, and including a specific content of the fluoro group-containing additive.

In an exemplary embodiment of the present application, there is provided the lithium secondary battery in which the fluoro group-containing additive is included in an amount of 2 parts by weight or less based on 100 parts by weight of the electrolyte.

In another exemplary embodiment, the fluoro group-containing additive may be included in an amount of 2 parts by weight or less, preferably 1.8 parts by weight or less, and less preferably 1.5 parts by weight or less, and 0.5 part by weight or more or 1 part by weight or more based on 100 parts by weight of the electrolyte.

When the fluoro group-containing additive is included in the electrolyte, it serves to form an F-derived film on the silicon-based negative electrode. Accordingly, as described above, even when the carbonate compound including a fluoro group is included in an amount of the parts by weight described above, the problem of an amount of gas generation can be addressed.

In an exemplary embodiment of the present application, there is provided the lithium secondary battery in which the fluoro group-containing additive is $LiCF_3COO$ or LiDFP.

The LiDFP may refer to lithium difluorophosphate.

As described above, the fluoro group-containing additive is reduced and decomposed to form stable inorganic film components (LiF, $Li_2O$, etc.) on the silicon-based negative electrode. In addition, by introducing the fluoro group-containing additive, even when a limited content of FEC (Fluoro-Ethylene Carbonate) is used (about 10%) as a solvent of the electrolyte, an F-rich film that is advantageous for a silicon-based negative electrode is formed, so an advantageous room temperature performance feature is obtained.

Applying an excessive amount of FEC as a solvent of the electrolyte (FEC 15% or more) is advantageous for room temperature performance but is not possible at high temperatures due to gas generation. Accordingly, even when FEC is limitedly used, such as around 10%, an F-rich film can be formed by applying a Li salt-type additive together, which replaces FEC and forms a film advantageous for a silicon-based negative electrode, making it possible to maintain room temperature performance.

In an exemplary embodiment of the present application, the electrolyte may include vinylene carbonate. In this case, vinylene carbonate may be included in an amount of 0.3 part by weight or less based on 100 parts by weight of the electrolyte.

In another exemplary embodiment, vinylene carbonate may be included in an amount of 0.3 part by weight or less, and preferably 0.2 part by weight or less, and 0 part by weight or more or 0.1 part by weight or more based on 100 parts by weight of the electrolyte.

In the case of vinylene carbonate, when applied to a carbon-based negative electrode, a film formation effect on the negative electrode is excellent, and as a result, there is no unreacted vinylene carbonate left in the electrolyte and the problem of gas generation is not caused. However, in the case of a silicon-based negative electrode, the film formation effect of vinylene carbonate on a negative electrode is insignificant, and unreacted vinylene carbonate is oxidized at the positive electrode during charging, causing a rapid increase in amount of gas generation.

Accordingly, the electrolyte of the lithium secondary battery including the silicon-based negative electrode according to the present application, which maximizes capacity characteristics, includes vinylene carbonate in the content as described above. When vinylene carbonate is included in an amount of parts by weight described above, vinylene carbonate enables proper film formation on a surface of the negative electrode together with the fluoro group-containing additive, so the amount of gas generation can be reduced and unreacted vinylene carbonate (VC) is not left in the battery.

In the present application, there is provided the lithium secondary battery in which the electrolyte has a viscosity of 1.1 $g/cm^3$ or higher and an ionic conductivity of 5.5 mS/cm or higher under a condition of 25°C.

In the present application, the electrolyte may have a viscosity of 1.1 $g/cm^3$ or higher under the condition of 25°C, preferably a viscosity of 1.11 $g/cm^3$ or higher under the condition of 25°C, or a viscosity of 1.12 $g/cm^3$ or higher under the condition of 25°C, and a viscosity of 2.0 $g/cm^3$ or less under the condition of 25°C, preferably a viscosity of 1.3 $g/cm^3$ or less under the condition of 25°C, and more preferably a viscosity of 1.25 $g/cm^3$ or less under the condition of 25°C.

In the present application, the electrolyte may have an ionic conductivity of 5.5 mS/cm or higher, preferably 5.6 mS/cm or higher, and more preferably 5.7 mS/cm or higher, and 6.5 mS/cm or less, specifically 6.3 mS/cm or less, and more specifically 6.0 mS/cm or less, under the condition of 25°C.

In the case of the electrolyte according to the present application, the ionic conductivity within the range described above can be ensured by including the carbonate compound including a fluoro group, as a solvent, in an amount of the parts by weight described above, and at the same time, the problem of gas generation accordingly is addressed by adjusting the content of vinylene carbonate content, and including a specific content of the fluoro group-containing additive, so that an electrolyte with suitable viscosity and ionic conductivity can be derived. As an example, the aforementioned viscosity and ionic conductivity are ensured as physical properties that the electrolyte of the present invention should have from the standpoint of optimizing a Li ion migration speed of the High Ni NCM and the silicon-based positive electrode.

In an exemplary embodiment of the present application, the lithium salt is a material that is readily soluble in the non-aqueous electrolyte solution, and the lithium salt includes two or more species of anions selected from the group

consisting of $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, and $(CF_3CF_2SO_2)_2N^-$.

In an exemplary embodiment of the present application, the lithium salt may include $LiPF_6$ and LiFSI.

One or more additives, for example, a haloalkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte for the purpose of improving life characteristics of the battery, suppressing a decrease in battery capacity, improving discharge capacity of the battery, and the like, in addition to the above-described electrolyte components.

According to the present application, the silicon-based negative electrode may include a negative electrode current collector layer, and a negative electrode active material layer provided on one surface or both surfaces of the negative electrode current collector layer.

The negative electrode current collector layer generally has a thickness of 1 μm to 100 μm. Such a negative electrode current collector is not particularly limited as long as it has high conductivity without causing a chemical change in the battery. For example, copper, stainless steel, aluminum, nickel, titanium, fired carbon, copper or stainless steel each surface-treated with carbon, nickel, titanium, silver, or the like, an aluminum-cadmium alloy, or the like may be used. In addition, the negative electrode current collector layer may have microscopic irregularities formed on a surface to enhance a bonding force of the negative electrode active material, and may be used in various forms such as a film, a sheet, a foil, a net, a porous body, a foamed body, or a non-woven fabric body.

However, the thickness may be variously modified depending on a type and a use of negative electrode used, and is not limited thereto.

In an exemplary embodiment of the present application, the negative electrode active material layer may include a negative electrode active material layer composition, and the negative electrode active material layer composition may include a silicon-based active material.

In an exemplary embodiment of the present application, the negative electrode active material layer may include a negative electrode active material layer composition, and the negative electrode active material layer composition may include one or more selected from the group consisting of a silicon-based active material, a negative electrode conductive material, and a negative electrode binder.

In an exemplary embodiment of the present application, the negative electrode active material layer may include a negative electrode active material layer composition, and the negative electrode active material layer composition may include a silicon-based active material; a negative electrode conductive material; and a negative electrode binder.

In an exemplary embodiment of the present application, the silicon-based active material may include one or more selected from the group consisting of SiOx (x=0), SiOx (0<x<2), SiC, and a Si alloy.

In an exemplary embodiment of the present application, the silicon-based active material may include one or more selected from the group consisting of SiOx (x=0), SiOx (0<x≤ 2) and a metal impurity, and may include 70 parts by weight or more of SiOx (x=0) based on 100 parts by weight of the silicon-based active material.

In another exemplary embodiment, SiOx (x = 0) may be included in an amount of 70 parts by weight or more, preferably 80 parts by weight or more, and more preferably 90 parts by weight or more, and 100 parts by weight or less, preferably 99 parts by weight or less, and more preferably 95 parts by weight or less based on 100 parts by weight of the silicon-based active material.

In an exemplary embodiment of the present application, for the silicon-based active material, pure silicon (Si) may be particularly used as the silicon-based active material. The use of pure silicon (Si) as the silicon-based active material may mean that, based on 100 parts by weight of the total silicon-based active material as described above, pure Si particles (SiOx (x=0)) not bonded to other particles or elements are included within the above range.

Note that an average particle diameter (D50) of the silicon-based active material of the present invention may be 5 μm to 10 μm, specifically 5.5 μm to 8 μm, and more specifically 6 μm to 7 μm. If the average particle diameter is less than 5 μm, the specific surface area of the particle increases excessively, causing the viscosity of the negative electrode slurry to increase excessively. Accordingly, the particles constituting the negative electrode slurry are not smoothly dispersed. In addition, if the size of the silicon-based active material is excessively small, a contact area between the silicon particles and the conductive material is reduced due to the composite consisting of the conductive material and the binder in the negative electrode slurry, so that a disconnection possibility of the conductive network increases, thereby lowering the capacity retention rate. On the other hand, if the average particle diameter is greater than 10 μm, excessively large silicon particles are present, so that the surface of the negative electrode is not smooth, causing current density unevenness during charging and discharging. Additionally, if the silicon particles are excessively large, the phase stability of the negative electrode slurry becomes unstable, degrading processability. As a result, the capacity retention rate of the battery decreases.

In an exemplary embodiment of the present application, the silicon-based active material generally has a characteristic BET surface area. The BET surface area of the silicon-based active material is preferably 0.01 $m^2$/g to 150.0 $m^2$/g, more preferably 0.1 $m^2$/g to 100.0 $m^2$/g, particularly preferably 0.2 $m^2$/g to 80.0 $m^2$/g, and most preferably 0.2 $m^2$/g to 18.0 $m^2$/g. The BET specific surface area is measured in accordance with DIN 66131 (using nitrogen).

In an exemplary embodiment of the present application, the silicon-based active material may be present, for example, in a crystalline or amorphous form, and is preferably not porous. The silicon particles are preferably spherical or fragment-shaped particles. Alternatively, but less preferably, the silicon particles may also have a fiber structure or be present in the form of a silicon-containing film or coating.

In an exemplary embodiment of the present application, the silicon-based active material may be included in an amount of 60 parts by weight or more based on 100 parts by weight of the negative electrode active material layer composition.

In another exemplary embodiment, the silicon-based active material may be included in an amount of 60 parts by weight or more, preferably 65 parts by weight or more, and more preferably 70 parts by weight or more, and 95 parts by weight or less, preferably 90 parts by weight or less, and more preferably 80 parts by weight or less based on 100 parts by weight of the negative electrode active material layer composition.

The negative electrode active material layer composition according to the present application uses the specific negative electrode conductive material and negative electrode binder capable of controlling the volume expansion rate during charging and discharging even when the silicon-based active material having a significantly high capacity is used within the above range. Accordingly, even when the silicon-based active material is within the above range, the negative electrode active material layer composition does not degrade the performance of the negative electrode and has excellent output characteristics in charging and discharging.

In an exemplary embodiment of the present application, the silicon-based active material may have a non-spherical shape and its sphericity (circularity) is, for example, 0.9 or less, for example, 0.7 to 0.9, for example 0.8 to 0.9, and for example 0.85 to 0.9.

In the present application, the sphericity is determined by Equation 1 below, in which A is an area and P is a boundary line.

[Formula 1]

$$4\pi A/P^2$$

In the related art, it is general to use only graphite-based compounds as the negative electrode active material. However, in recent years, as the demand for high-capacity batteries is increasing, attempts to mix and use silicon-based compounds are increasing in order to increase capacity. However, the silicon-based compounds have limitations in that the volume rapidly expands during the charging/discharging, resulting in damage to the conductive path formed in the negative electrode active material layer to degrade the performance of the battery.

Therefore, in an exemplary embodiment of the present application, the negative electrode active material layer composition may include a negative electrode conductive material and a negative electrode binder. That is, the negative electrode conductive material plays a role in securing a conductive path, and the binder plays a role in holding the negative electrode conductive material during charging and discharging.

In an exemplary embodiment of the present application, the negative electrode conductive material may include one or more selected from the group consisting of a point-like conductive material, a planar conductive material and a linear conductive material.

In an exemplary embodiment of the present application, the point-like conductive material refers to a conductive material that may be used for improving conductivity of the negative electrode, forms conductivity without causing a chemical change and has a circular or point shape. Specifically, the point-like conductive material may be one or more selected from the group consisting of natural graphite, artificial graphite, carbon black, acetylene black, Ketjen black, channel black, furnace black, lamp black, thermal black, conductive fiber, fluorocarbon, aluminum powder, nickel powder, zinc oxide, potassium titanate, titanium oxide, and a polyphenylene derivative, and preferably may include carbon black in terms of high conductivity and excellent dispersibility.

In an exemplary embodiment of the present application, the point-like conductive material may have a BET specific surface area of 40 $m^2$/g or greater and 70 $m^2$/g or less, preferably 45 $m^2$/g or greater and 65 $m^2$/g or less, and more preferably 50 $m^2$/g or greater and 60 $m^2$/g or less. In an exemplary embodiment of the present application, a particle diameter of the point-like conductive material may be 10 nm to 100 nm, preferably 20 nm to 90 nm, and more preferably 40 nm to 60 nm.

In an exemplary embodiment of the present application, the conductive material may include a planar conductive material.

The planar conductive material refers to a conductive material that improves conductivity by increasing surface contact between silicon particles in the negative electrode and at the same time serves to suppress disconnection of the conductive path due to the volume expansion. The planar conductive material may be expressed as a plate-like conductive material or a bulk-type conductive material.

In an exemplary embodiment of the present application, the planar conductive material may include one or more selected from the group consisting of plate-like graphite, graphene, graphene oxide, and graphite flake, and preferably may be plate-like graphite.

In an exemplary embodiment of the present application, an average particle diameter (D50) of the planar conductive material may be 2 $\mu$m to 7 $\mu$m, specifically 3 $\mu$m to 6 $\mu$m, and more specifically 4 $\mu$m to 5 $\mu$m. When the above range is satisfied, the sufficient particle size results in easy dispersion without causing an excessive increase in viscosity of the negative electrode slurry. Therefore, the dispersion effect is excellent when dispersing using the same equipment and time.

In an exemplary embodiment of the present application, there is provided the negative electrode composition in which the planar conductive material has D10 of 0.5 $\mu$m or greater and 1.5 $\mu$m or less, D50 of 4.0 $\mu$m or greater and 5.0 $\mu$m or less, and D90 of 7.0 $\mu$m or greater and 15.0 $\mu$m or less.

In an exemplary embodiment of the present application, for the planar conductive material, a planar conductive material with a high specific surface area having a high BET specific surface area or a planar conductive material with a low specific surface area may be used.

In an exemplary embodiment of the present application, for the planar conductive material, a planar conductive material with a high specific surface area or a planar conductive material with a low specific surface area may be used without limitation. However, in particular, the planar conductive material according to the present application can be affected by dispersion to some extent in the electrode performance, so that a planar conductive material with a low specific surface area that does not cause a problem in dispersion is used particularly preferably.

In an exemplary embodiment of the present application, the planar conductive material may have a BET specific surface area of 1 $m^2$/g or greater.

In another exemplary embodiment, the planar conductive material may have a BET specific surface area of 1 $m^2$/g or greater and 500 $m^2$/g or less, preferably 5 $m^2$/g or greater and 300 $m^2$/g or less, and more preferably 5 $m^2$/g or greater and 250 $m^2$/g or less.

In another exemplary embodiment, the planar conductive material is a planar conductive material with a high specific surface area, and the BET specific surface area may satisfy a range of 50 $m^2$/g or greater and 500 $m^2$/g or less, preferably 80 $m^2$/g or greater and 300 $m^2$/g or less, and more preferably 100 $m^2$/g or greater and 250 $m^2$/g or less.

In another exemplary embodiment, the planar conductive material is a planar conductive material with a low specific surface area, and the BET specific surface area may satisfy a range of 1 $m^2$/g or greater and 40 $m^2$/g or less, preferably 5 $m^2$/g or greater and 30 $m^2$/g or less, and more preferably 5 $m^2$/g or greater and 25 $m^2$/g or less.

Other conductive materials may include linear conductive materials such as carbon nanotubes. The carbon nanotubes may be bundle-type carbon nanotubes. The bundle-type carbon nanotubes may include a plurality of carbon nanotube units. Specifically, the term 'bundle type' herein refers to, unless otherwise specified, a bundle or rope-shaped secondary shape in which a plurality of carbon nanotube units are aligned side by side in such an orientation that longitudinal axes of the carbon nanotube units are substantially the same, or are entangled. The carbon nanotube unit has a graphite sheet having a cylindrical shape with a nano-sized diameter, and has an sp2 bonding structure. In this case, the characteristics of a conductor or a semiconductor may be exhibited depending on the rolled angle and structure of the graphite sheet. As compared with entangled-type carbon nanotubes, the bundle-type carbon nanotubes can be more uniformly dispersed during the manufacture of the negative electrode, and can form more smoothly a conductive network in the negative electrode to improve the conductivity of the negative electrode.

In an exemplary embodiment of the present application, the negative electrode conductive material may include a linear conductive material and the linear conductive material may be carbon nanotubes.

In an exemplary embodiment of the present application, the carbon nanotubes may be SWCNT or/and MWCNT. When the linear conductive material is SWCNT, a length of the SWCNT may be 0.5 $\mu$m to 100 $\mu$m, and preferably 1 $\mu$m to 80 $\mu$m.

In an exemplary embodiment of the present application, the negative electrode conductive material may be included in an amount of 5 parts by weight or more and 40 parts by weight or less based on 100 parts by weight of the negative electrode active material layer composition.

In another exemplary embodiment, the negative electrode conductive material may be included in an amount of 5 parts by weight or more and 40 parts by weight or less, preferably 5 parts by weight or more and 30 parts by weight or less, and more preferably 5 parts by weight or more and 25 parts by weight or less based on 100 parts by weight of the negative electrode active material layer composition.

In an exemplary embodiment of the present application, the negative electrode conductive material may include a planar conductive material and a linear conductive material, and a ratio of the planar conductive material to the linear conductive material may satisfy 1:0.001 to 1:0.3.

In an exemplary embodiment of the present application, as the negative electrode conductive material includes the planar conductive material and the linear conductive material and the composition and ratio described above are satisfied, respectively, the life characteristics of an existing lithium secondary battery are not significantly affected, and the number of points where the battery can be charged and discharged increases, so that output characteristics are excellent at a high C-rate.

The negative electrode conductive material according to the present application has a completely different configuration from a conductive material that is applied to the positive electrode. That is, the negative electrode conductive material according to the present application serves to hold the contact between silicon-based active materials whose volume expansion of the electrode is very large due to charging and discharging, and the positive electrode conductive material serves to impart some conductivity while serving as a buffer when roll-pressed, and is completely different from the negative electrode conductive material of the present invention in terms of configuration and role.

In addition, the negative electrode conductive material according to the present application is applied to a silicon-based active material, and has a completely different configuration from that of a conductive material that is applied to a graphite-based active material. That is, since a conductive material that is used for an electrode having a graphite-based active material simply has smaller particles than the active material, the conductive material has characteristics of improving output characteristics and imparting some conductivity, and is completely different from the negative electrode conductive material that is applied together with the silicon-based active material as in the present invention, in terms of configuration and role.

In an exemplary embodiment of the present application, the plate-like conductive material that is used as the negative electrode conductive material described above has a different structure and role from those of the carbon-based active material that is generally used as the negative electrode active material. Specifically, the carbon-based active material that is used as the negative electrode active material may be artificial graphite or natural graphite, and refers to a material that is processed into a spherical or point-like shape and used so as to facilitate storage and release of lithium ions.

On the other hand, the plate-like conductive material that is used as the negative electrode conductive material is a material having a planar or plate-like shape, and may be expressed as plate-like graphite. That is, the plate-like conductive material is a material that is included in order to maintain a conductive path in the negative electrode active material layer, and refers to a material for securing a conductive path in a planar shape inside the negative electrode active material layer, rather than playing a role in storing and releasing lithium.

That is, in the present application, the use of plate-like graphite as a conductive material means that graphite is processed into a planar or plate-like shape and used as a material for securing a conductive path rather than playing a role in storing or releasing lithium. In this case, the negative electrode active material included together has high-capacity characteristics with respect to storing and releasing lithium, and serves to store and release all lithium ions transferred from the positive electrode.

On the other hand, in the present application, the use of a carbon-based active material as an active material means that the carbon-based active material is processed into a point-like or spherical shape and used as a material for storing or releasing lithium.

In an exemplary embodiment of the present application, the negative electrode binder may include at least one selected from the group consisting of polyvinylidenefluoride-hexafluoropropylene copolymer (PVDF-co-HFP), polyvinylidenefluoride, polyacrylonitrile, polymethylmethacrylate, polyvinyl alcohol, carboxymethylcellulose (CMC), starch, hydroxypropylcellulose, regenerated cellulose, polyvinylpyrrolidone, tetrafluoroethylene, polyethylene, polypropylene, polyacrylic acid, ethylene-propylene-diene monomer (EPDM), sulfonated EPDM, styrene butadiene rubber (SBR), fluoro rubber, poly acrylic acid, and the above-described materials in which a hydrogen is substituted with Li, Na, Ca, etc., and may also include various copolymers thereof.

The negative electrode binder according to an exemplary embodiment of the present application serves to hold the silicon-based active material and the negative electrode conductive material in order to prevent distortion and structural deformation of the negative electrode structure when the volume of the silicon-based active material expands and relaxes. When such roles are satisfied, all of the general negative electrode binders can be applied. Specifically, an aqueous binder may be used, and more specifically, a PAM-based binder may be used.

In an exemplary embodiment of the present application, the negative electrode binder may be included in an amount of 30 parts by weight or less, preferably 25 parts by weight or less, more preferably 20 parts by weight or less, and 5 parts by weight or more, and 8 parts by weight or more based on 100 parts by weight of the negative electrode active material layer composition.

Compared to existing carbon-based negative electrodes, when a Si-based negative electrode is used, an aqueous binder is applied in parts by weight described above, allowing the use of a point-like conductive material with a low functional group content. In addition, the above characteristics allows the point-like conductive material to have hydrophobicity and the excellent bond strength between the conductive material/binder.

In an exemplary embodiment of the present application, the silicon-based negative electrode may be formed by coating a negative electrode slurry including the negative electrode active material layer composition on one surface or both surfaces of the negative electrode current collector layer.

In an exemplary embodiment of the present application, the negative electrode slurry may include a negative electrode active material layer composition and a slurry solvent.

In an exemplary embodiment of the present application, a solid content of the negative electrode slurry may satisfy a range of 5% or more and 40% or less.

In another exemplary embodiment, the solid content of the negative electrode slurry may satisfy a range of 5% or more and 40% or less, preferably 7% or more and 35% or less, and more preferably 10% or more and 30% or less.

The solid content of the negative electrode slurry may mean a content of the negative electrode composition included in the negative electrode slurry, and may mean a content of the negative electrode composition based on 100 parts by weight of the negative electrode slurry.

When the solid content of the negative electrode slurry satisfies the above range, the viscosity is appropriate during formation of the negative electrode active material layer, so that particle agglomeration of the negative electrode composition is minimized to efficiently form the negative electrode active material layer.

In an exemplary embodiment of the present application, the slurry solvent may be used without limitation as long as it can disperse the negative electrode composition described above, and specifically, water or NMP may be used.

In an exemplary embodiment of the present application, a porosity of the negative electrode active material layer may satisfy a range of 10% or greater and 60% or less.

In another exemplary embodiment, the porosity of the negative electrode active material layer may satisfy a range of 10% or greater and 60% or less, preferably 20% or greater and 50% or less, and more preferably 30% or greater and 45% or less.

The porosity varies depending on compositions and contents of the silicon-based active material, the conductive material, and the binder included in the negative electrode active material layer, and in particular, satisfies the range described above when the silicon-based active material and the conductive material are included in the specific compositions and contents according to the present application, so that the electrode has electric conductivity and resistance within appropriate ranges.

In an exemplary embodiment of the present application, the positive electrode includes a positive electrode current collector layer and a positive electrode active material layer provided on one surface or both surfaces of the positive electrode current collector layer.

In an exemplary embodiment of the present application, the positive electrode active material layer may include a positive electrode active material layer composition, and the positive electrode active material layer composition may include one or more selected from the group consisting of a positive electrode active material, a positive electrode conductive material, and a positive electrode binder.

In the positive electrode, the positive electrode current collector layer is not particularly limited as long as it has conductivity without causing a chemical change in the battery. For example, stainless steel, aluminum, nickel, titanium, fired carbon, aluminum or stainless steel each surface-treated with carbon, nickel, titanium, silver, or the like, or the like may be used. In addition, the positive electrode current collector layer may typically have a thickness of 1 to 500 $\mu$m, and a surface of the positive electrode current collector layer may be formed with microscopic irregularities to enhance adhesive force with the positive electrode active material. For example, the positive electrode current collector layer may be used in various forms such as a film, a sheet, a foil, a net, a porous body, a foamed body, and a non-woven fabric body.

In an exemplary embodiment of the present application, there is provided the lithium secondary battery in which thicknesses of the positive electrode and negative electrode current collector layers are 1 $\mu$m or greater and 100 $\mu$m or less and thicknesses of the positive electrode and negative electrode active material layers are 20 $\mu$m or greater and 500 $\mu$m or less.

The positive electrode active material may be a positive electrode active material that is typically used. Specifically, the positive electrode active material may include one or more selected from the group consisting of $LiNi_xCo_yMn_zO_2$ (x+y+z=1); $LiNi_aCo_bMn_cAl_dO_2$ (a+b+c+d=1); $LiMn_2O_4$; $LiNi_{0.5}Mn_{1.5}O_2$; and $LiM_xFe_yPO_4$ (M: transition metal, x+y=1). In this case, the positive electrode active material is not limited thereto.

Specifically, for the positive electrode active material, NCM or NCMA that is commonly used may be used.

In general, the positive electrode active material may be a layered compound such as a lithium cobalt oxide ($LiCoO_2$) and a lithium nickel oxide ($LiNiO_2$), or a compound substituted with one or more transition metals; a lithium iron oxide such as $LiFe_3O_4$; a lithium manganese oxide such as chemical formula $Li_{1+c1}Mn_{2-c1}O_4$ ($0 \leq c1 \leq 0.33$), $LiMnO_3$, $LiMn_2O_3$ and $LiMnO_2$; a lithium copper oxide ($Li_2CuO_2$); a vanadium oxide such as $LiV_3O_8$, $V_2O_5$ and $Cu_2V_2O_7$; Ni-site type lithium nickel oxide represented by chemical formula $LiNi_{1-c2}M_{c2}O_2$ (where M is at least one selected from the group consisting of Co, Mn, Al, Cu, Fe, Mg, B, and Ga, and satisfies $0.01 \leq c2 \leq 0.6$); a lithium manganese composite oxide represented by chemical formula $LiMn_{2-c3}M_{c3}O_2$ (where M is at least one selected from the group consisting of Co, Ni, Fe, Cr, Zn and Ta, and satisfies $0.01 \leq c3 \leq 0.6$) or $Li_2Mn_3MO_8$ (where M is at least one selected from the group consisting of Fe, Co, Ni, Cu and Zn.); $LiMn_2O_4$ in which a part of Li of the chemical formula is substituted with an alkaline earth metal ion, or the like, but is not limited thereto. The positive electrode may be Li metal.

In the exemplary embodiment of the present application, the positive electrode active material includes a lithium composite transition metal compound including nickel (Ni), cobalt (Co), and manganese (Mn), the lithium composite transition metal compound includes single particles or secondary particles, and an average particle diameter (D50) of the single particles may be 1 $\mu$m or greater.

For example, the average particle diameter (D50) of the single particles may be 1 $\mu$m or greater and 12 $\mu$m or less, 1 $\mu$m or greater and 8 $\mu$m or less, 1 $\mu$m or greater and 6 $\mu$m or less, greater than 1 $\mu$m and 12 $\mu$m or less, greater than 1 $\mu$m and 8 $\mu$m or less, or greater than 1 $\mu$m and 6 $\mu$m or less.

Even when the single particles are formed with a small average particle diameter (D50) of 1 $\mu$m or greater and 12 $\mu$m or less, the particle strength may be excellent. For example, the single particle may have a particle strength of 100 to 300 MPa when roll-pressing with a force of 650 kgf/cm$^2$. Accordingly, even when the single particles are roll-pressed with a strong force of 650 kgf/cm$^2$, the phenomenon of an increase in micro-particle in an electrode due to particle breakage is alleviated, which improves the life characteristics of the battery.

The single particles may be manufactured by mixing and firing a transition metal precursor and a lithium source material. The secondary particles may be manufactured by a method different from that of the single particles, and the composition thereof may be the same as or different from that of the single particles.

The method of forming the single particles is not particularly limited, but generally can be formed by over-firing with raised firing temperature, or may be manufactured by using additives such as grain growth promoters that help over-firing, or by changing a starting material.

For example, the firing is performed at a temperature at which single particles can be formed. To this end, the firing should be performed at a temperature higher than a temperature during manufacture of the secondary particles. For example, when the composition of the precursor is the same, the firing should be performed at a temperature about 30°C to 100°C higher than a temperature during manufacture of the secondary particles. The firing temperature for forming the single particles may vary depending on the metal composition in the precursor. For example, when forming single particles with a high-Ni NCM-based lithium composite transition metal oxide having a nickel (Ni) content of 80 mol% or more, the firing temperature may be about 700°C to 1000°C, and preferably about 800°C to 950°C. When the firing temperature satisfies the above range, a positive electrode active material including single particles having excellent electrochemical properties can be manufactured. If the firing temperature is below 790°C, a positive electrode active material including a lithium composite transition metal compound in the form of secondary particles may be manufactured, and if the firing temperature exceeds 950°C, excessive firing occurs and a layered crystal structure is not properly formed, so that the electrochemical properties may be deteriorated.

In the present specification, the single particle is a term used to distinguish the same from typical secondary particles resulting from agglomeration of tens to hundreds of primary particles, and is a concept including a single particle consisting of one primary particle and a quasi-single particle form that is an agglomerate of 30 or less primary particles.

Specifically, in the present invention, the single particle may be a single particle consisting of one primary particle or a quasi-single particle form that is an agglomerate of 30 or less primary particles, and the secondary particle may be an agglomerate form of hundreds of primary particles.

In the exemplary embodiment of the present application, the lithium composite transition metal compound, which is the positive electrode active material, further includes secondary particles, and the average particle diameter (D50) of the single particles is smaller than the average particle diameter (D50) of the secondary particles.

In the present invention, the single particle may be a single particle consisting of one primary particle or a quasi-single particle form that is an agglomerate of 30 or less primary particles, and the secondary particle may be an agglomerate form of hundreds of primary particles.

The above-described lithium composite transition metal compound may further include secondary particles. The secondary particle means a form formed by agglomeration of primary particles, and can be distinguished from the concept of a single particle including one primary particle, one single particle and a quasi-single particle form, which is an agglomerate of 30 or less primary particles.

The secondary particle may have a particle diameter (D50) of 1 $\mu$m to 20 $\mu$m, 2 $\mu$m to 17 $\mu$m, and preferably 3 $\mu$m to 15 $\mu$m. The specific surface area (BET) of the secondary particles may be 0.05 m$^2$/g to 10 m$^2$/g, preferably 0.1 m$^2$/g to 1 m$^2$/ g, and more preferably 0.3 m$^2$/g to 0.8 m$^2$/g.

In a further exemplary embodiment of the present application, the secondary particle is an agglomerate of primary particles, and the average particle diameter (D50) of the primary particles is 0.5 $\mu$m to 3 $\mu$m. Specifically, the secondary particle may be an agglomerate form of hundreds of primary particles, and the average particle diameter (D50) of the primary particles may be 0.6 $\mu$m to 2.8 $\mu$m, 0.8 $\mu$m to 2.5 $\mu$m, or 0.8 $\mu$m to 1.5 $\mu$m.

When the average particle diameter (D50) of the primary particles satisfies the above range, a single-particle positive electrode active material having excellent electrochemical properties can be formed. If the average particle diameter (D50) of the primary particles is too small, the number of agglomerates of primary particles forming lithium nickel-based oxide particles increases, reducing the effect of suppressing particle breakage during roll-pressing, and if the average particle diameter (D50) of the primary particles is too large, a lithium diffusion path inside the primary particles may be lengthened, increasing a resistance and degrading an output characteristic.

According to a further exemplary embodiment of the present application, the average particle diameter (D50) of the single particles is smaller than the average particle diameter (D50) of the secondary particles. As a result, the single particles may have excellent particle strength even if they are formed with a small particle diameter, and accordingly, the increase phenomenon of micro-particles in an electrode due to particle breakage is alleviated, which can improve the life characteristics of the battery.

In an exemplary embodiment of the present application, the average particle diameter (D50) of the single particles is 1 $\mu$m to 18 $\mu$m smaller than the average particle diameter (D50) of the secondary particles.

For example, the average particle diameter (D50) of the single particles may be 1 $\mu$m to 16 $\mu$m smaller, 1.5 $\mu$m to 15 $\mu$m smaller, or 2 $\mu$m to 14 $\mu$m smaller than the average particle diameter (D50) of the secondary particles.

When the average particle diameter (D50) of the single particles is smaller than the average particle diameter (D50) of the secondary particles, for example, when the above range is satisfied, the single particles may have excellent particle strength even if they are formed with a small particle diameter, and as a result, the increase phenomenon of micro-particles in an electrode due to particle breakage is alleviated, which improves the life characteristics and energy density of the battery.

According to a further exemplary embodiment of the present application, the single particles are included in an amount of 15 parts by weight to 100 parts by weight based on 100 parts by weight of the positive electrode active material. The single particles may be included in an amount of 20 parts by weight to 100 parts by weight, or 30 parts by weight to 100 parts by weight based on 100 parts by weight of the positive electrode active material.

For example, the single particles may be included in an amount of 15 parts by weight or more, 20 parts by weight or more, 25 parts by weight or more, 30 parts by weight or more, 35 parts by weight or more, 40 parts by weight or more, or 45 parts by weight or more based on 100 parts by weight of the positive electrode active material. The single particles may be included in an amount of 100 parts by weight or less based on 100 parts by weight of the positive electrode active material.

When the single particles are included within the above range, excellent battery characteristics may be exhibited in combination with the negative electrode material described above. In particular, when the single particles are included in an amount of 15 parts by weight or more, the increase phenomenon of micro-particles in an electrode due to particle breakage in a roll-pressing process after fabrication of an electrode can be alleviated, which can improve the life characteristics of the battery.

In the exemplary embodiment of the present application, the lithium composite transition metal compound may further include secondary particles, and the secondary particles may be included in an amount of 85 parts by weight or less based on 100 parts by weight of the positive electrode active material. The secondary particles may be included in an amount of 80 parts by weight or less, 75 parts by weight or less, or 70 parts by weight or less based on 100 parts by weight of the positive electrode active material. The secondary particles may be included in an amount of 0 part by weight or more based on 100 parts by weight of the positive electrode active material.

When the above range is satisfied, the above-described effects due to the existence of the single particles in the positive electrode active material can be maximized. In the case in which the positive electrode active material of the secondary particles is included, the components thereof may be the same as or different from those exemplified in the single-particle positive electrode active material described above, and may mean an agglomerate form of single particles.

In the exemplary embodiment of the present application, the positive electrode active material in 100 parts by weight of the positive electrode active material layer may be included in an amount of 80 parts by weight or more and 99.9 parts by weight or less, preferably 90 parts by weight or more and 99.9 parts by weight or less, more preferably 95 parts by weight or more and 99.9 parts by weight or less, most preferably 98 parts by weight or more and 99.9 parts by weight or less.

The positive electrode active material layer may include a positive electrode conductive material and a positive electrode binder together with the positive electrode active material described above.

In this case, the positive electrode conductive material is used to impart conductivity to the electrode, and can be used without particular limitation as long as the positive electrode conductive material has electronic conductivity without causing a chemical change in a battery to be constituted. Specific examples may include graphite such as natural graphite and artificial graphite; a carbonbased material such as carbon black, acetylene black, Ketjen black, channel black, furnace black, lamp black, thermal black and carbon fiber; metal powders or metal fibers such as copper, nickel, aluminum and silver; a conductive whisker such as zinc oxide and potassium titanate; a conductive metal oxide such as titanium oxide; or a conductive polymer such as polyphenylene derivative, or the like, and any one thereof or a mixture of two or more thereof may be used.

In addition, the positive electrode binder serves to improve bonding between particles of the positive electrode active material and adhesive force between the positive electrode active material and the positive electrode current collector. Specific examples may include polyvinylidene fluoride (PVDF), vinylidene fluoridehexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, tetrafluoroethylene, polyethylene, polypropylene, ethylene-propylene-diene polymer (EPDM), sulfonated-EPDM, styrene butadiene rubber (SBR), fluoro rubber, or various copolymers thereof, and the like, and any one thereof or a mixture of two or more thereof may be used.

The separator serves to separate the negative electrode and the positive electrode and to provide a migration path of lithium ions, in which any separator may be used as the separator without particular limitation as long as it is typically used in a secondary battery, and particularly, a separator having high moisture-retention ability for an electrolyte as well as a low resistance to the migration of electrolyte ions may be preferably used. Specifically, a porous polymer film, for example, a porous polymer film manufactured from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. In addition, a usual porous non-woven fabric, for example, a non-woven fabric formed of high melting point glass fibers, polyethylene terephthalate fibers, or the like may be used. Furthermore, a coated separator including a ceramic component or a polymer material may be used to secure heat resistance or mechanical strength, and the separator having a single layer or multilayer structure may be selectively used.

Mode for Invention

Hereinafter, preferred examples will be provided for better understanding of the present invention. It will be apparent to one skilled in the art that the examples are only provided to illustrate the present invention and various modifications and alterations are possible within the scope and technical spirit of the present invention. Such modifications and alterations naturally fall within the scope of claims included herein.

**<Preparation Example>**

**(1) Preparation of Positive Electrode**

Li $(Ni_aCo_bMn_c)\ O_2$ was used as the positive electrode active material.

In this case, NCM of the positive electrode active material excluding lithium (Li) and oxygen $(O_2)$ had a ratio of Ni:Co:Mn = 93:5:2, satisfying the ratio of a:b:c = 93:5:2 (a:b:c = 0.93:0.05:0.02). In addition, D50 was 3.8 $\mu$m, Dmin and Dmax were 1.2 $\mu$m and 13 $\mu$m, the BET specific surface area was 0.64 $m^2$, and the true density was 4.78 to 4.80 $g/cm^3$.

The positive electrode active material, the positive electrode conductive material (LB. CNT), and the binder (PVdF, KF9700) were added to a solvent (N-methylpyrrolidone, NMP) at a weight ratio of 97.96:0.8:1.24 to prepare a positive electrode slurry. The positive electrode slurry was applied to an aluminum (Al) thin film having a thickness of 25 $\mu$m, which was a positive electrode current collector, dried, and then roll-pressed to prepare a positive electrode.

**(2) Preparation of Negative Electrode**

A negative electrode active material layer composition was prepared using Si (average particle diameter (D50): 5 $\mu$m) as a silicon-based active material, a first conductive material, a second conductive material, and polyacrylamide as a binder at a weight ratio of 80:9.6:0.4:10. A negative electrode slurry (solid concentration: 28 wt%) was prepared by adding the composition to distilled water as a solvent for formation of a negative electrode slurry.

The first conductive material was plate-like graphite (specific surface area: 17 $m^2$/g, average particle diameter (D50): 3.5 $\mu$m), and the second conductive material was carbon nanotubes.

As a mixing method, the first conductive material, the second conductive material, the binder and water were dispersed at 2500 rpm for 30 minutes by using a homo mixer, the active material was added thereto, and the resultant mixture was dispersed at 2500 rpm for 30 minutes to fabricate a slurry.

The negative electrode slurry was coated on both surfaces of a copper current collector (thickness: 15 $\mu$m) serving as a negative electrode current collector with a loading amount of 3.00 mg/ cm $^2$, which was then roll-pressed and dried in a vacuum oven at 130°C for 10 hours to form a negative electrode active material layer (thickness: 23 $\mu$m).

**(3) Preparation of Secondary Battery**

An electrode assembly was prepared by interposing a compression-resistant thin film separator (PE 12 $\mu$m) with ceramic coating 3 $\mu$m /3 $\mu$m between the positive electrode and the negative electrode. After placing the electrode assembly inside a case, an electrolyte was injected into the case to prepare a lithium secondary battery.

In this case, the electrolyte satisfied the composition and content shown in Table 1 below.

[Table 1]

| | Solvent | Lithium salt | Fluoro group-containing additive (parts by weight) | Vinylene carbonate (parts by weight) | Viscosity (g/cm$^3$, 25°C) | Ionic conductivity (mS/cm, 25°C) |
|---|---|---|---|---|---|---|
| Example 1 | FEC/DEC (Diethyl-carbonate) =15/88 | 1M LiPF$_6$ | LiTFA, 1.5 parts by weight | 0.2 | 1.15 | 5.8 |
| Example 2 | FEC/DEC=20/80 | 1M LiPF$_6$ | LiTFA, 1.5 parts by weight | 0.2 | 1.21 | 5.9 |
| Example 3 | FEC/DEC=15/88 | 1M LiPF$_6$ | LiTFA, 1.5 parts by weight | 0 | 1.12 | 5.8 |
| Comparative Example 1 | FEC/DEC=8/92 | 1M LiPF$_6$ | LiTFA, 1.5 parts by weight | 0.2 | 1.11 | 5.4 |
| Comparative Example 2 | FEC/DEC=15/88 | 1M LiPF$_6$ | - | 0.2 | 1.12 | 5.2 |
| Comparative Example 3 | FEC/DEC=15/88 | 1M LiPF$_6$ | LiTFA, 1.5 parts by weight | 1 | 1.15 | 5.3 |
| Comparative Example 4 | FEC/DEC=15/88 | 1M LiPF$_6$ | - | 0 | 1.16 | 5.4 |
| Comparative Example 5 | FEC/DEC=10/90 | 1M LiPF$_6$ | - | 2.5 | 1.13 | 5.3 |
| Comparative Example 6 | FEC/DEC=10/90 | 1M LiPF$_6$ | - | 0.5 | 1.12 | 5.2 |

**Experimental Example 1: Life Evaluation**

For the lithium secondary batteries including the negative electrodes prepared in the Examples and Comparative Examples, the life and capacity retention rate were evaluated using an electrochemical charging and discharging device. The in-situ cycle test was conducted on the secondary battery at 4.2-3.2 V 2 C/1 C, and during the test, 1 C/1 C charging/discharging (4.2-3.2 V) was performed every 50 cycles to measure the capacity retention rate, and results thereof are listed in Table 4.

life retention rate (%) = { (discharge capacity in the Nth cycle)/(discharge capacity in the first cycle)} $\times$ 100

**Experimental Example 2: Evaluation of Resistance Increase Rate Measurement**

In Experimental Example 1, during the test, the capacity retention rate was measured by charging/discharging (4.2-3.0V) the battery at 0.33C/0.33C every 50 cycles, and then the resistance increase rate was compared and analyzed by discharging the battery with a pulse of 2.5C at SOC50 to measure the resistance. Results are shown in Table 2 below.

**Experimental Example 3: Volume variation Due To Gas Generation Using Pouch Test**

After fully charging a pouch cell with a capacity of 1Ah at 0.33C to 4.2V for the lithium secondary batteries including the negative electrodes prepared in the Examples and Comparative Examples, the batteries were stored in the oven at 60°C for 8 weeks. Thereafter, after full discharge to 2.5V, the gas generated in the pouch cell was extracted using a GC/MS method and gas quantitative analysis was performed, and results thereof are listed in Table 2 below.

[Table 2]

| | Capa. retention @500th 1C/1C cycle, 4.2-3.2V | Resistance Increase % @500th 1C/1C cycle, 4.2-3.2V@25°C | Gas volume after storage test (mL/Ah) |
|---|---|---|---|
| Example 1 | 91.5 | 36.8 | 2.5 |
| Example 2 | 92.5 | 31.4 | 2.2 |
| Example 3 | 92.0 | 35.5 | 2.0 |
| Comparative Example 1 | 85.5 | 50.0 | 6.5 |
| Comparative Example 2 | 87.0 | 48.0 | 8.2 |
| Comparative Example 3 | 90.0 | 40.5 | 7.0 |
| Comparative Example 4 | 89.5 | 42.5 | 8.0 |
| Comparative Example 5 | 88.5 | 46.3 | 9.5 |
| Comparative Example 6 | 89.1 | 43.0 | 6.8 |

In Examples 1 to 3 according to the present application, the content of vinylene carbonate was adjusted and the additive that forms an effective film on the silicon-based negative electrode was included, so it could be confirmed that the problems that vinylene carbonate does not form an effective film on the silicon-based negative electrode and remains and a large amount of gas is generated due to the oxidation reaction at the positive electrode could be solved. Accordingly, it could be confirmed that the lithium secondary battery according to the present application has the features of ensuring performance by reducing the amount of gas generation even during long-term storage at high temperatures and ensuring ionic conductivity.

In Comparative Example 1 in which the carbonate compound including a fluoro group was included in an amount of less than 10 parts by weight based on 100 parts by weight of the solvent, it could be confirmed that an effective film was not formed on the negative electrode, so the capacity retention rate decreased and the resistance increase rate increased.

Comparative Example 2 corresponds to a case in which the fluoro group-containing additive according to the present application is not included. In this case, it could be confirmed that the excessive amount of FEC was included, so the amount of gas generation rapidly increased at high temperatures, resulting in a large volume change rate and a decrease in life performance.

Comparative Example 3 corresponds to a case in which the fluoro group-containing additive according to the present application is included but the content of vinylene carbonate exceeds the range according to the present application. In the case of Comparative Example 3 using a silicon-based negative electrode, it could be confirmed that vinylene carbonate did not form an effective film on the negative electrode and remained, a large amount of gas was generated due to the oxidation reaction at the positive electrode, increasing the amount of gas generation compared to the Examples, and thus the capacity retention rate was lowered and the resistance increase rate increased.

Comparative Examples 4 to 6 each correspond to a case in which the fluoro group-containing additive according to the present application is not included and the content of vinylene carbonate is adjusted. In this case, it could also be confirmed that FEC was included, so the amount of gas generation rapidly increased at high temperatures, resulting in a large volume change rate and a decrease in life performance.

**Claims**

1. A lithium secondary battery comprising:

   a positive electrode;
   a silicon-based negative electrode;
   a separator provided between the positive electrode and the negative electrode; and
   an electrolyte,
   wherein the silicon-based negative electrode comprises a negative electrode current collector layer, and a negative electrode active material layer provided on one surface or both surfaces of the negative electrode current collector layer,
   wherein the negative electrode active material layer comprises a negative electrode active material layer composition,

wherein the negative electrode active material layer composition comprises a silicon-based active material, and the silicon-based active material comprises one or more selected from the group consisting of $SiO_x$ (x=0), $SiO_x$ (0<x<2), SiC, and a Si alloy,

wherein the electrolyte comprises a solvent, a lithium salt, a fluoro group-containing additive, and vinylene carbonate (VC),

wherein the vinylene carbonate is included in an amount of 0.3 part by weight or less based on 100 parts by weight of the electrolyte,

wherein a carbonate compound comprising a fluoro group is included in an amount of 10 parts by weight or more based on 100 parts by weight of the solvent, and

wherein the fluoro group-containing additive is included in an amount of 2 parts by weight or less based on 100 parts by weight of the electrolyte.

2. The lithium secondary battery of claim **1,** wherein when the lithium secondary battery is stored at 60°C for 8 weeks, an amount of gas generation per capacity is 5 ml/Ah or less.

3. The lithium secondary battery of claim 1, wherein the fluoro group-containing additive is $LiCF_3COO$.

4. The lithium secondary battery of claim 1, wherein the solvent is a mixed solvent comprising two types of carbonate-based compounds.

5. The lithium secondary battery of claim 1, wherein the lithium salt comprises two or more species of anions selected from the group consisting of $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, and $(CF_3CF_2SO_2)_2N^-$.

6. The lithium secondary battery of claim 1, wherein the silicon-based active material comprises one or more selected from the group consisting of $SiO_x$ (x=0), $SiO_x$ (0<x<2), and a metal impurity, and comprises 70 parts by weight or more of $SiO_x$ (x=0) based on 100 parts by weight of the silicon-based active material.

7. The lithium secondary battery of claim 1, wherein the silicon-based active material is included in an amount of 60 parts by weight or more based on 100 parts by weight of the negative electrode active material layer composition.

8. The lithium secondary battery of claim 1, wherein the positive electrode comprises a positive electrode current collector layer and a positive electrode active material layer provided on one surface or both surfaces of the positive electrode current collector layer,

wherein the positive electrode active material layer comprises a positive electrode active material layer composition,

wherein the positive electrode active material layer composition comprises a positive electrode active material, and

wherein the positive electrode active material comprises one or more selected from the group consisting of $LiNi_xCo_yMn_zO_2$ (x+y+z=1) ; $LiNi_aCo_bMn_cAl_dO_2$ (a+b+c+d=1) ; $LiMn_2O_4$; $LiNi_{0.5}Mn_{1.5}O_2$; and $LiM_xFe_yPO_4$ (M: transition metal, x+y=1).

9. The lithium secondary battery of claim 8, wherein thicknesses of the positive electrode and negative electrode current collector layers are 1 μm or greater and 100 μm or less, and wherein thicknesses of the positive electrode and negative electrode active material layers are 20 μm or greater and 500 μm or less.

10. The lithium secondary battery of claim 1, wherein the electrolyte has a viscosity of 1.1 g/cm$^3$ or higher and an ionic conductivity of 5.5 mS/cm or higher under a condition of 25°C.

[Figure 1]

## INTERNATIONAL SEARCH REPORT

| International application No. |
|---|
| **PCT/KR2023/021518** |

### A. CLASSIFICATION OF SUBJECT MATTER

**H01M 10/0567**(2010.01)i; **H01M 4/38**(2006.01)i; **H01M 4/48**(2010.01)i; **H01M 4/134**(2010.01)i; **H01M 4/131**(2010.01)i; **H01M 10/0569**(2010.01)i; **H01M 10/052**(2010.01)i; **H01M 4/02**(2006.01)i

According to International Patent Classification (IPC) or to both national classification and IPC

### B. FIELDS SEARCHED

Minimum documentation searched (classification system followed by classification symbols)

H01M 10/0567(2010.01); H01M 10/0525(2010.01); H01M 10/0569(2010.01); H01M 10/058(2010.01); H01M 10/42(2006.01); H01M 4/525(2010.01); H01M 4/583(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬 이차전지(lithium secondary battery), 전해질(electrolyte), 실리콘계 음극 활물질(silicon-based active material), 비닐렌 카보네이트(vinylene carbonate), 용매(solvent), 카보네이트(carbonate), 첨가제(additive), 플루오로(fluoro)

### C. DOCUMENTS CONSIDERED TO BE RELEVANT

| Category* | Citation of document, with indication, where appropriate, of the relevant passages | Relevant to claim No. |
|---|---|---|
| Y | KR 10-2020-0114403 A (LG CHEM, LTD.) 07 October 2020 (2020-10-07) See claims 1 and 6; and paragraphs [0063], [0072]-[0074], [0082], [0084], [0102], [0109], [0113]-[0115] and [0117]. | 1-10 |
| Y | JP 2020-167054 A (MITSUI CHEMICALS INC.) 08 October 2020 (2020-10-08) See claims 1 and 4; paragraphs [0013]-[0014] and [0028]-[0029]; and table 1. | 1-10 |
| A | JP 2020-102309 A (FURUKAWA BATTERY CO., LTD.) 02 July 2020 (2020-07-02) See entire document. | 1-10 |
| A | WO 2022-097073 A1 (EOCELL LIMITED) 12 May 2022 (2022-05-12) See entire document. | 1-10 |

☑ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **12 April 2024** | **15 April 2024** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
|---|
| **PCT/KR2023/021518** |

| C. | DOCUMENTS CONSIDERED TO BE RELEVANT | |
|---|---|---|
| Category* | Citation of document, with indication, where appropriate, of the relevant passages | Relevant to claim No. |
| A | WO 2022-098503 A1 (NOVONIX BATTERY TECHNOLOGY SOLUTIONS INC. et al.) 12 May 2022 (2022-05-12)<br>   See entire document. | 1-10 |

Form PCT/ISA/210 (second sheet) (July 2022)

| International application No. |
| --- |
| **PCT/KR2023/021518** |

| Patent document<br>cited in search report | | | Publication date<br>(day/month/year) | Patent family member(s) | | | Publication date<br>(day/month/year) |
| --- | --- | --- | --- | --- | --- | --- | --- |
| KR | 10-2020-0114403 | A | 07 October 2020 | CN | 113678297 | A | 19 November 2021 |
| | | | | EP | 3910716 | A1 | 17 November 2021 |
| | | | | EP | 3910716 | A4 | 09 March 2022 |
| | | | | JP | 2022-519502 | A | 24 March 2022 |
| | | | | JP | 7134556 | B2 | 12 September 2022 |
| | | | | KR | 10-2463234 | B1 | 07 November 2022 |
| | | | | US | 2022-0123297 | A1 | 21 April 2022 |
| | | | | WO | 2020-197278 | A1 | 01 October 2020 |
| JP | 2020-167054 | A | 08 October 2020 | JP | 7276957 | B2 | 18 May 2023 |
| JP | 2020-102309 | A | 02 July 2020 | None | | | |
| WO | 2022-097073 | A1 | 12 May 2022 | CN | 116802865 | A | 22 September 2023 |
| | | | | EP | 4241328 | A1 | 13 September 2023 |
| | | | | KR | 10-2023-0104665 | A | 10 July 2023 |
| | | | | US | 2022-0149425 | A1 | 12 May 2022 |
| WO | 2022-098503 | A1 | 12 May 2022 | CN | 116547836 | A | 04 August 2023 |
| | | | | EP | 4241323 | A1 | 13 September 2023 |
| | | | | JP | 2023-549119 | A | 22 November 2023 |
| | | | | KR | 10-2023-0157931 | A | 17 November 2023 |
| | | | | US | 2023-0268554 | A1 | 24 August 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020220187433

- JP 2009080971 A